# EUROPEAN PATENT APPLICATION

(11) **EP 1 696 263 A1**
(43) Date of publication of application: **30.08.2006**
(21) Application number: 06075244.1
(22) Date of filing: 02.02.2006
(51) Int. Cl.: G03B 21/56

(54) **A combined audio-visual system**

(30) Priority: 28.02.2005 NL 1028425
(71) Applicant: Art Cinema B.V., 1601 MG Enkhuizen (NL)
(72) Inventor: Van Setten, Albertus Johannes, 1602 KX Enkhuizen (NL); Roelandschap, Erwin Patrick, 1693 GV Wervershoof (NL)
(74) Representative: Klavers, Cornelis

(57) **Abstract**

There is disclosed an audio-visual system which comprises an image display screen and one or more loudspeakers. The image display screen is made of a sound-transmitting material, behind which the loudspeakers are disposed. The image display screen has an optically fine-meshed structure that is open to sound. The advantage of the audio-visual system is that a compact audio-visual system is obtained. The loudspeakers are hidden from view by the screen, which has a dual function - as an image display screen and as a protective loudspeaker cloth - in that case. Images may be printed on the screen, and the screen may function as a projection screen.

## Description

The present invention relates to an audio-visual system comprising an image display screen and one or more loudspeakers.

The present invention furthermore relates to a method by which image and/or sound are reproduced.

Such an audio-visual system is known from JP-A-6327090. The system that is known therefrom comprises an image display screen and loudspeakers arranged in pairs along the circumference of the screen. To the listener this suggests that the sound is being produced from a position between the pairs of loudspeakers in question. By arranging the pairs of loudspeakers on opposite sides of the screen, the aforesaid sound producing position will typically be located on the screen itself without there being a need to form holes in the image display screen for the sound.

A drawback of the known system is the fact that it takes up a significant amount of space both in the vertical and in the horizontal direction of the system.

The object of the present invention is to provide an improved universally applicable and easily controllable audio-visual system that exhibits optimised sound and image reproducing characteristics.

In order to accomplish that object, the audio-visual system according to the invention is characterized in that the audio-visual system comprises an image display screen and one or more loudspeakers, wherein the image display screen: is made of a sound-transmitting material, behind which the loudspeakers are disposed, has an optically fine-meshed structure that is open to sound, and wherein at least part of the screen is configured as a projection screen.

Accordingly, the method according to the invention is characterized in that image and sound are reproduced from a plane through an image display screen and loudspeakers positioned therebehind, respectively, wherein the screen can be moved in a manually and/or in an automatically controlled manner.

The advantage of the audio-visual system and the method according to the invention is that the loudspeakers are hidden from view by the screen which has a dual function as an image display screen on the one hand and a protective loudspeaker cloth on the other hand, on which images may be printed. The fact that a traditional loudspeaker cloth is no longer needed furthermore has an advantageous effect on the cost price of the system according to the invention. The use of an optically fine-meshed image display screen having an open sound structure enables the sound to be transmitted practically without impediment, i.e. without being dampened or distorted, and on account of the fine-meshed structure of the screen, a sufficiently clear and contrast-rich image is nevertheless provided.

One embodiment of the audio-visual system according to the invention is characterized in that at least part of the screen is provided with one or more images, whilst another part of the screen is configured as a projection screen, for example.

In this way stationary as well as moving images can be displayed as desired, which images may be accompanied by sound or music, if desired. In practice the system may also function only as an audio system or as a system for displaying stationary images.

Another embodiment of the audio-visual system according to the invention is characterized in that the optically fine-meshed structure of the screen has an opening factor of 2-20%, in particular 3-10%, more in particular about 5%.

Such a structure having an opening factor in the above range has appeared to be optimally suitable in practice for obtaining an optimum image and sound quality.

Furthermore, the audio-visual system may be characterized in that the screen is configured as a horizontally or vertically movable or rotatable screen.

The image display screen may advantageously be movable in any desired manner.

A preferred embodiment of the audio-visual system according to the invention is characterized in that the system comprises roller means disposed on at least one side of the screen.

Like the loudspeakers that are used these days, such roller means take up little space - especially in the depth direction - whilst a large number of images relating to varying subjects to be freely selected by the user of the system can be advantageously brought out therewith either manually or automatically, usually by remote control.

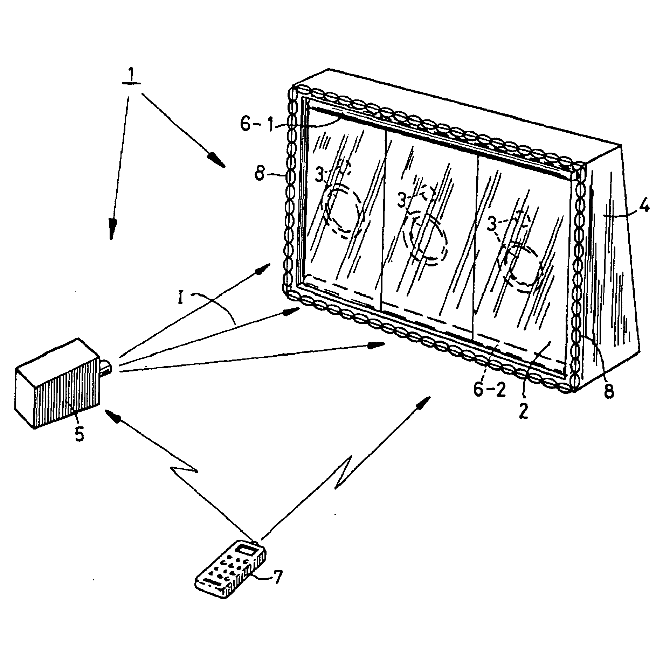

The audio-visual system and the method according to the present invention will now be explained in more detail with reference to the appended figure. The figure shows a possible embodiment of the audio-visual system according to the invention and also functions to explain the method according to the invention.

The figure schematically shows one of the possible embodiments of an audio-visual system 1. The system 1 comprises an image display screen 2 and one or more loudspeakers 3 or loudspeaker combinations for reproducing one or more sound channels by means of low tone, medium tone and high tone loudspeakers 3. The screen 2 and the loudspeakers 3 are combined in a body 4, in which the loudspeakers 3 are hidden from view behind the screen 2. The body 4 may be made of, for example, a metal, wood, such as MDF, or melamine chipboard.

The image display screen 2 is made of a material that transmits sound practically without dampening or distortion. Examples thereof are a of material made up of plastic and/or textile and/or metal wires, or a different kind of fabric, albeit with a structure that is open to sound, so that the sound can pass through and/or past the screen practically without impediment. In one embodiment, the screen 2 may be fixed in position within the body 4, but the screen 2 may also be movable within the body 4 in a manner as shown, which will be explained yet in more detail. Usually images will be present on one or more parts of the screen 2 in that case, which images are printed on the material of the screen. Furthermore, the screen 2 may function as a projection screen, in which case the system 1 comprises a projector 5, which projects images I on an unprinted part of the screen 2. To obtain an image with a sufficient light output and contrast on the screen 2, at least that part of the screen 2 which is used for the images and/or the projection will have an optically fine-meshed structure, so that the images and the projections thereon will be readily visible. It is preferred to use a fabric material having an open sound structure combined with an optically sufficiently fine-meshed structure for the screen 2.

In principle the screen may be configured as a horizontally or vertically movable or rotatable screen 2, which may be provided with louvers. In the embodiment that is shown in the figure, the system 1 comprises roller means 6-1, 6-2 disposed on at least one side of the screen 2, so that it will be possible to wind and unwind the screen. In the present case the upper roller means 6-1 is provided with a tube motor (not shown), by which the roller means 6-1 can be rotatably driven. The driving motor is preferably built into the reel for the screen 2 in a compact manner in that case.

Desired pictures can thus be displayed on the screen 2, or a blank part of the screen, which functions as a projection screen, can be brought out. The screen, provided with an image, may be wound in a loop (not shown) on the roller means 6. According to another possibility, if the screen 2 is wound or unwound by the roller means 6 each time in the illustrated embodiment, the use of simple spring means (not shown) may suffice for rolling back the screen 2.

The roller means 6 can be manually or automatically operated. Preferably, the system 1 comprises means 7, which may or may not be remotely controlled, for controlling the sound and/or image, in particular for controlling the roller means 6-1 and/or 6-2 that move the screen 2.

The system 1 may comprise a frame 8 having a desired colour and a decorative edge provided on the body 4 and around the screen 2 and the loudspeakers 3, so that the system will go well with a specific interior.

A suitable optically fine-meshed structure of the screen 2 has a so-called opening factor of 2-20%, in particular 3-10%, more in particular about 5%. That is, the total see-through area of the screen amounts to a percentage of the screen area as indicated by the opening factor. The solid material of the screen makes up the remaining percentage to 100% of the screen area. When an opening factor of more than about 20% is used, the minimally required quality of the image reproduction, image reflection and/or reflection value of the screen is affected, and when an opening factor of less than about 2% is used, the sound reproduction will be affected and the sound will be dampened too much.

The preferred dimensions of the meshes of the structure of the screen 2 are adapted to a normal living room viewing distance between the viewer and the screen. A larger viewing distance generally makes it possible to use a larger mesh size without the quality of the image being displayed being significantly affected thereby.

In one embodiment of the system 1 as shown in the drawing and explained in the foregoing, the roller means 6-1 and 6-2 are disposed on opposite sides of the screen 2, with the tube motor being mounted in one roller means and the spring means being mounted in the roller means disposed on the opposite side of the screen 2. In a variant thereof, the spring means are configured such that they will exert a greater pulling force on the screen 2 when the system 1 is being used for projecting moving images than when the system 1 is being used for displaying an image provided on the screen 2. In other words, in order to achieve an optimal and geometrically correct representation of the images, the projection screen is pulled or stretched tighter than is necessary for merely displaying fixed images. After all, a certain curvature of the screen is admissible in the latter case without the visual perception of the image being affected too much. In addition, the fact that a high mechanical tension is not necessary at all times leads to a prolonged life of the screen which, conditions permitting, is tensioned less tight.

## Claims

1. An audio-visual system comprising an image display screen and one or more loudspeakers, wherein the image display screen:
- is made of a sound-transmitting material, behind which the loudspeakers are disposed,
- has an optically fine-meshed structure that is open to sound, and wherein
- at least part of the screen is configured as a projection screen.

2. An audio-visual system according to claim 1, **characterized in that** at least part of the screen is provided with one or more images.

3. An audio-visual system according to either one of the claims 1 or 2, **characterized in that** the optically fine-meshed structure of the screen has an opening factor of 2-20%, in particular 3-10%, more in particular about 5%.

4. An audio-visual system according to any one of the claims 1-3, **characterized in that** the screen is configured as a horizontally or vertically movable or rotatable screen.

5. An audio-visual system according to any one of the claims 1-4, **characterized in that** the system comprises roller means disposed on at least one side of the screen.

6. An audio-visual system according to claim 5, **characterized in that** said roller means are provided with spring means.

7. An audio-visual system according to claim 6, **characterized in that** the spring means are configured such that they will exert a greater pulling force on the screen when the system is being used for projecting moving images than when the system is being used for displaying an image provided on the screen.

8. An audio-visual system according to either one of the claims 5 or 7, **characterized in that** the system comprises means, which may or may not be remotely controlled, for controlling the sound and/or image, in particular for operating the screen.

9. An audio-visual system according to any one of the claims 1-8, **characterized in that** the system comprises a frame that surrounds the screen.

10. An audio-visual system according to any one of the claims 1-9, **characterized in that** the system comprises one or more projectors for projecting images on the screen.

11. A method by which image and sound are reproduced from a plane through an image display screen and loudspeakers positioned therebehind, respectively, wherein the screen can be moved in a manually and/or in an automatically controlled manner.

12. A method according to claim 11, **characterized in that** stationary or moving images are displayed on the screen.
